# EUROPEAN PATENT APPLICATION

(11) **EP 4 628 748 A1**
(43) Date of publication of application: **08.10.2025**
(21) Application number: 25162956.4
(22) Date of filing: 11.03.2025
(51) Int. Cl.: F16F 9/04, F16F 9/05

(54) **AIR-SLEEVE WITH HYBRID CORD ANGLES**

(30) Priority: 20.03.2024 US 202463567550 P; 21.10.2024 CN 202411467545
(71) Applicant: BeijingWest Industries Co. Ltd., 102400 Beijing (CN)
(72) Inventor: ROSE, Iain, Luton Beds LU27LZ (GB); CHEVALLEREAU, Baptiste, 75001 Paris (FR); MARCHAND, Jocelyn, 92300 Levallois Perret (FR)
(74) Representative: Lukaszyk, Szymon

(57) **Abstract**

An air-sleeve for use in an air spring having a first, second, and a third sections with the second section being between the first and third sections. The first section has axial cords, the third section has cords in a cross-ply arrangement, and the second section has a combination of axial and cross cross-ply cords. The air-sleeve combines the benefits to withstand large strokes including cardanic angles while keeping its dimensional stability (low diameter expansion with pressure) and have the ability to twist, which avoids the need for an additional bearing element. The first section allows for twist and provides low stiffness to twist, the second section is supported by a restraining cylinder to secure the cord tension under inner air pressure and the third section rolls against the piston to allow the axial stroke.

## Description

### Technical Field

This invention relates generally to air springs for vehicle suspensions and more particularly to air-sleeves.

### Background of the Invention

Traditional air-sleeves are made of two layers of cords at opposite helix angles (typically +/- 45°) called cross-ply technology. They are very durable for axial and cardanic displacement, but they can't withstand twist as one of the cord layers is going to restrict it under tension.

In recent front and rear suspension axle applications, a level of twist (over 5°) is required which normally requires the addition of an extra bearing.

What is needed is an air spring that can withstand large strokes including cardanic angles while keeping its dimensional stability (low diameter expansion with pressure) and have the ability to twist, which avoids the need for an additional bearing element.

### Summary of the invention

In general terms, this invention provides an air sleeve with hybrid cords to allow for twisting in one section and dimensional stability and durability in the other section. The invention is for use on, for example, an air spring having a top mount housing or top cap defining a compartment; a piston disposed in the compartment; and an air sleeve disposed in the compartment. The air sleeve extends between a first end secured to the top cap, and a second end secured to the piston defining an air chamber extending between the top cap and the piston.

A rigid sleeve called restraining cylinder is mounted adjacent the air sleeve. The air sleeve has first, second, and third sections with the second section being between the first and third sections. The first section has axial cords, the third section has cords in a cross-ply arrangement, and the second section has a combination of axial and cross-ply cords.

The air spring combines the benefits of great torsion decoupling and dimensional stability with the ability to twist. The first section allows for twist and provides low stiffness to twist, the second section (with an overlap of axial and cross-ply cords) is supported by the restraining cylinder to secure the cord tension under inner air pressure and the third section rolls against the piston to allow the axial stroke.

These and other features and advantages of this invention will become more apparent to those skilled in the art from the detailed description of a preferred embodiment. The drawings that accompany the detailed description are described below.

### Brief description of the drawings

Figure 1 is a cross section of an air spring over damper module with the sleeve with hybrid cord angles of the present invention.
Figure 2 is a plan view of the sleeve with hybrid cord angles of the present invention.
Figure 3 is an exploded view showing the layers of the sleeve with hybrid cord angles of the present invention.
Figure 4 is cross section of a rear standalone air spring with the sleeve with hybrid cord angles of the present invention.

### Detailed Description of a Preferred Embodiment

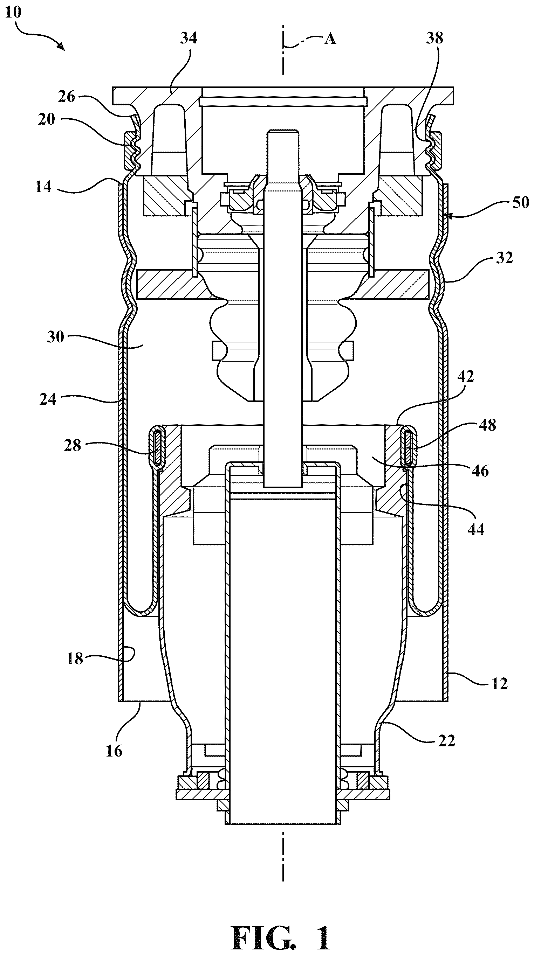

With reference to figure 1, the air spring assembly of the present invention is generally shown at 10. The air spring assembly 10 includes a restraining cylinder 12, having a generally cylindrical shape, disposed on a center axis A and extending along the center axis A between a first end 14 and a second end 16. The restraining cylinder 12 defines a chamber 18 extending along the center axis A between the first end 14 and the second end 16. An air sleeve 24 is placed inside the retraining cylinder 12. Its top end 20 is crimped and sealed to the top cap 34 by use of a crimp ring 40. Its bottom end 28 is crimped and sealed to the piston 22 by use of crimp ring 48.

A piston 22, having a tubular shape, is disposed in the chamber 18 on the center axis A and adjacent to the closed end 16 of the restraining cylinder 12. An air sleeve 24, made from an elastomeric material reinforced with cords and having a generally tubular shape, is disposed in the compartment on the center axis A. The air sleeve 24 extends annularly about the center axis A between a primary end 26 and a secondary end 28. The primary end 26 is secured to the top cap 34. The secondary end 28 is secured to the piston 22 thereby defining a pocket (the air chamber of the air spring) 30 extending between the top cap 34 and the piston 22. A crimp ring 32, having a generally circular shape, is disposed in the chamber 30. The crimp ring 32 abuts the air sleeve 24 to sandwich the air sleeve 24 between the crimp ring 32 and the restraining cylinder 12 to secure the air sleeve 24 to the restraining cylinder 12 in the chamber 18.

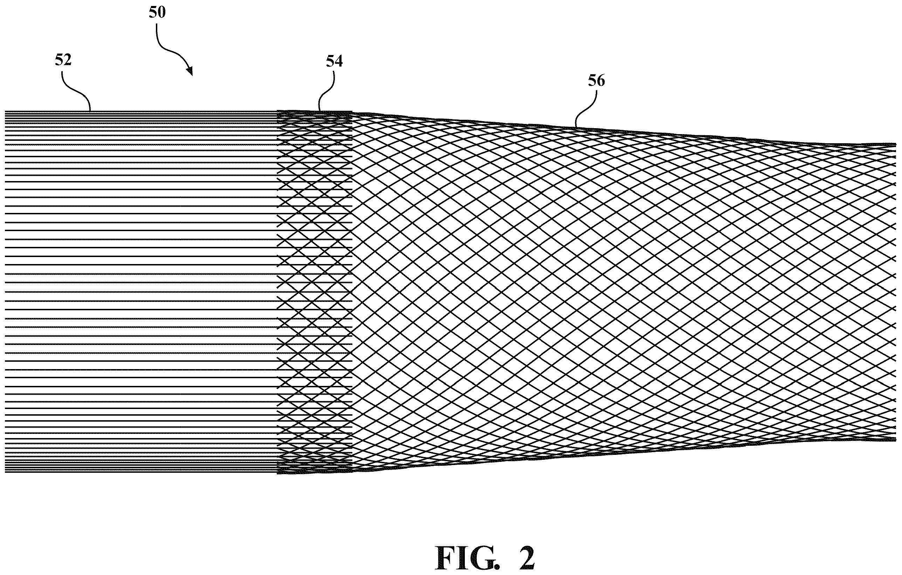

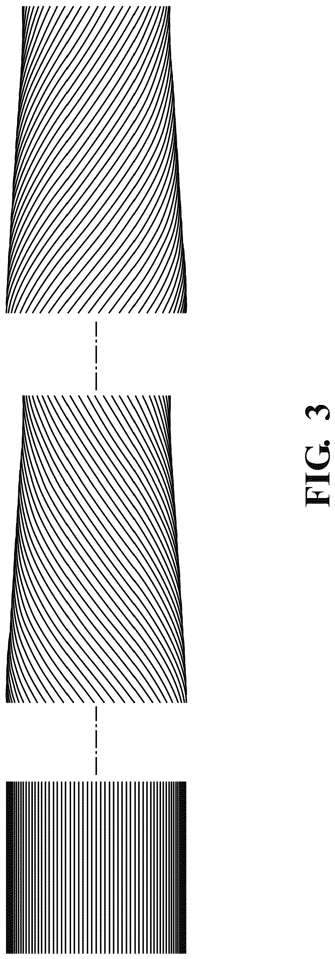

The cord reinforcement of the air sleeve 24 mounted in the air spring 10 on Figure 1 is detailed as the item 50 on Figure 2. The sleeve has a first section 52, a second section 54 and a third section 56. As illustrated, the first section 52 has axial cords or fibers, the third section 56 has cords in a cross-ply arrangement. As shown in figure 3, the cross-ply of the preferred embodiment includes two separate plies angled in opposite directions to create the cross-ply. In the disclosed embodiment, the cross-ply cords are not connected like in a fabric but are at an angle to each other. In the second section 54, the cords overlap and have both axially arranged cords, and cross-ply cords. The cords are embedded in an elastomer or rubber matrix to ensure the air tightness as well as resistance to chafing.

The cords can be made for example using straight-line extruded cord and rubber layers cut and laid at the required cord helix angle on a straight building mandrel and vulcanized.

The present air sleeve combines the benefits of great torsion decoupling and dimensional stability with the ability to twist at the upper end of the air spring. The first section 52 allows for twist and provides low stiffness to twist. The second section 54, the overlap section, is crimped, or fastened by other attaching methods, to secure the cord tension under inner air pressure. The overlap section (splice) can be secured (from blowing up under pressure) by being supported by restraining cylinder. The third section, the bottom rolling lob of the bladder remains durable under durability and cardanic action.

The hybrid construction of the present invention can be made using classic air-sleeve manufacturing processes using straight-line extruded cord and rubber layers cut and laid at the required cord helix angle on a straight building mandrel before getting vulcanized into a blade tool into an oven.

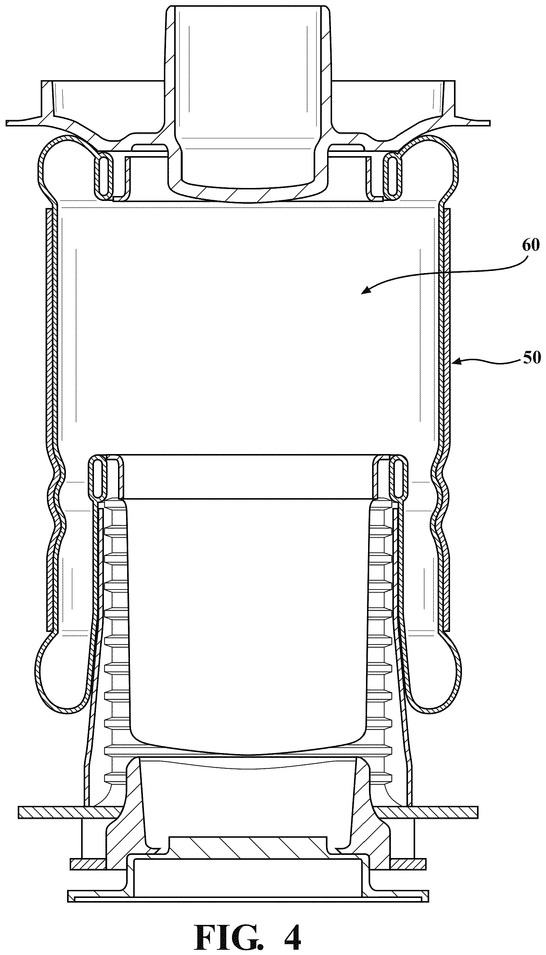

In figure 4, the sleeve 50 of the present invention is shown in use on a standalone air spring 60 to illustrate the versatility of the present invention for use on various different types of applications.

The foregoing invention has been described in accordance with the relevant legal standards, thus the description is exemplary rather than limiting in nature. Variations and modifications to the disclosed embodiment may become apparent to those skilled in the art and do come within the scope of the invention. Accordingly, the scope of legal protection afforded this invention can only be determined by studying the following claims.

## Claims

1. An air spring comprising:
a cap (34);
a restraining cylinder (12);
a piston (22);
an air sleeve (24) extending between a first end secured to said cap (34), and a second end secured to said piston (22) defining an air chamber extending between said cap (34) and said piston (22);
said air sleeve (24) having a first section (52), a second section (54), and a third section (56), said second section (54) being between said first (52) and third (56) sections, said first section (52) having axial cords, said third section (56) having cords in a cross-ply arrangement, said second section (54) having a combination of axial and cross-ply cords;
whereby said air spring combines the benefits of great torsion decoupling and dimensional stability with the ability to twist, said first section (52) allows for twist and provides low stiffness to twist, said second section (54) being supported by the restraining cylinder (12) to secure the cord tension under inner air pressure and said third section (56) provides durability.

2. The air spring of claim 1, wherein said air sleeve (24) has a primary end (26) and a secondary end (28); said primary end (26) is secured to said cap (34) and said secondary end (28) is secured to said piston (22) defining a pocket (30) which is an air tight cavity.

3. The air spring of claim 1 or 2, wherein said air sleeve (24) is a composite structure of polymer cord reinforcement and rubberlike material for the matrix.

4. The air spring of claim 2 or 3, further including a crimp ring (32) abutting said air sleeve (24) to sandwich the said air sleeve (24) between said crimp ring (32) and said restraining cylinder (12) to secure said air sleeve (24) to said restraining cylinder (12).

5. The air spring of any one of claims 1 to 4, wherein said third section (56) includes a first ply at a first angle and a second ply at a second angle, said first and second plies being overlaid one on top the other.

6. The air spring of any one of claims 1 to 5, wherein said cords are defined by straight-line extruded cord and rubber layers cut and laid at the required cord helix angle on a straight building mandrel and vulcanized.

7. An air-sleeve adapted for use in the air spring according to claim 1, said air-sleeve is the air sleeve (24),
whereby said air-sleeve combines the benefits of great torsion decoupling and dimensional stability with the ability to twist, said third section (56) rolls against the piston (22) to allow the axial stroke.

8. The air-sleeve of claim 7, wherein said cords are defined by a straight-line extruded cord and rubber layers cut and laid at the required cord helix angle on a straight building mandrel and vulcanized.

9. The air-sleeve of claim 7 or 8, wherein said third section (56) includes a first ply at a first angle and a second ply at a second angle, said first and second plies being overlaid one in top the other.

10. The air-sleeve of any one of claims 7 to 9, wherein the restraining cylinder (12) defines a compartment;
the piston (22) is disposed in said compartment;
the air sleeve (24) is disposed in said compartment;
said air sleeve (24) is mounted adjacent said restraining cylinder (12).

11. The air-sleeve of any one of claims 7 to 10, wherein said air sleeve (24) has a primary end (26) and a secondary end (28); said primary end (26) is secured to said cap (34) and said secondary end (28) is secured to said piston (22) defining a pocket (30).

12. The air-sleeve of claim 11, wherein said air sleeve (24) is tied at both ends by crimp rings (48) connecting said air sleeve (24) to said cap (34) and said piston (22).
